Europäisches Patentamt

(19) European Patent Office

Office européen des brevets

(11) Numéro de publication: **0 165 868**
**B1**

(12) **FASCICULE DE BREVET EUROPEEN**

(45) Date de publication du fascicule du brevet: **22.11.90**

(21) Numéro de dépôt: **85401188.9**

(22) Date de dépôt: **14.06.85**

(51) Int. Cl.⁵: **G 01 N 15/14,** G 02 B 19/00, G 01 N 21/64

(54) **Dispositif optique à rendement de collection élevé et cytofluorimètre en faisant application.**

(30) Priorité: **20.06.84 FR 8409676**

(43) Date de publication de la demande:
**27.12.85 Bulletin 85/52**

(45) Mention de la délivrance du brevet:
**22.11.90 Bulletin 90/47**

(84) Etats contractants désignés:
**CH DE GB LI NL**

(56) Documents cités:
DE-A-2 831 926
US-A-3 788 744
US-A-3 989 381
US-A-4 348 107

(73) Titulaire: **COMMISSARIAT A L'ENERGIE ATOMIQUE**
**31/33, rue de la Fédération**
**F-75015 Paris (FR)**

(72) Inventeur: **Gaucher, Jean-Claude**
**10, Chemin de la Vieuville**
**F-91530 Le Val Saint Germain (FR)**

(74) Mandataire: **Mongrédien, André et al**
**c/o BREVATOME 25, rue de Ponthieu**
**F-75008 Paris (FR)**

Courier Press, Leamington Spa, England.

EP 0 165 868 B1

## Description

La présente invention concerne un dispositif optique à rendement de collection élevé et un cytofluorimètre utilisant ce dispositif. Elle s'applique notamment à l'analyse d'un flux de cellules biologiques.

On connaît des cytofluorimètres dans lesquels la lumière émise par un flux de cellules biologiques, éclarié par un laser, est collectée par un objectif de microscope qui est situé à une distance importante du flux des cellules étudiées, dont l'ouverture est faible et qui ne collecte donc que peu de lumière en provenance des cellules.

La présente invention a pour but de remédier à cet inconvénient en proposant un dispositif optique destiné à l'analyse optique d'un flux de matière, par exemple un flux de cellules biologiques, et présentant un rendement de collection élevé, tout en permettant, dans une réalisation avantageuse, de reformer l'image du point éclairé du flux de matière.

On connaît, par le document US—A—4 348107, une cellule permettant de mesurer des signaux optiques produits lorsque des particules en suspension dans un fluide passent par une ouverture faite dans la cellule et sont irradiées par une source lumineuse.

On connaît aussi, par le document US—A—3 989 381, un appareil permettant de mesurer les caractéristiques optiques de petites particules en suspension dans un fluide et comprenant à cet effet une source lumineuse anisi qu'une chambre optique dont une paroi est réflectrice. La chambre est également définie par une lentille de collection placée en face de la paroi par rapport au centre de la chambre.

De façon précise, la présente invention a pour objet un dispositif optique permettant l'excitation lumineuse d'un flux de matière à analyser dirigé suivant un axe et capable d'émettre de la lumière lorsqu'il en reçoit, et/ou le recueil de lumière émise par ce flux, ce dispositif comprenant un premier élément optique, dispositif caractérisé en ce qu'il comprend en outre une chambre d'analyse de forme sphérique, délimitée par le premier élément optique et admettant un centre de symétrie, ladite chambre étant ouverte en deux extrémités, diamétralement opposées, en ce que le premier élément optique comporte un dioptre sphérique convexe admettant un axe de symétrie qui passe par le centre de la chambre, en ce que le premier élément optique est disposé de façon que l'axe due flux de matière passe par les deux extrémités et le centre de la chambre, et en ce qu'il comprend aussi un second élément optique admettant un axe de symétrie, et disposé de façon que son premier dioptre soit en regard du dioptre sphérique convexe du premier élément optique et que l'axe de symétrie dudit second élément optique soit confondu avec l'axe de symétrie du dioptre sphérique convexe du premier élément optique.

Bien entendu, le premier élément optique comporte un autre dioptre qui est constitué par au moins une partie de la paroi de la chambre mentionnée ci-dessus, de telle sorte que de la lumière pénétrant dans le premier élément par cet autre dioptre puisse en ressortir par le dioptre sphérique convexe jouant alors le rôle de dioptre de sortie, et réciproquement.

L'expression "émettre de la lumière" doit être prise dans un sens très général et signifie non seulement "engendrer de la lumière" sous l'impact d'un faisceau lumineux (par exemple de la lumière de fluorescence de cellules biologiques convenablement marquées) mais encore transmettre et diffracter de la lumière.

Le dispositif optique objet de l'invention entoure le flux étudié et en est donc très proche, et, du fait du dioptre sphérique dont il est muni, il possède une grande ouverture. Tout ceci confère au dispositif optique de l'invention un rendement de collection élevé.

De préférénce, la chambre d'analyse comporte une paroi optiquement réflectrice située à l'opposé du dioptre sphérique convexe du premier élément optique par rapport au centre de la chambre. On augmente encore ainsi le rendement de collection du dispositif.

De préférence, le second élément optiques est délimité par un premier et un second dioptres sphériques respectivement concave et convexe, admettant un axe de symétrie commun, qui est l'axe de symétrie du second élément optique.

Selon un mode de réalisation préféré du dispositif objet de l'invention, le premier point de Weierstrass du dioptre sphérique convexe du premier élément optique est confondu avec le centre de la chambre d'analyse et le second point de Weierstrass de ce dioptre sphérique convexe constitue à la fois de centre du premier dioptre du second élément optique et le premier point de Weierstrass du second dioptre de ce second élément optique.

On s'affranchit ainsi de toute aberration sphérique. L'ouverture du faisceau émergeant de cet ensemble de deux éléments optiques est relativement faible, ce qui permet d'utiliser simplement une lentille classique, disposée à la suite du second élément, pour obtenir, avec un minimum d'aberration sphérique, un faisceau lumineux parallèle à partir de la lumière issue du second élément:

Selon un mode de réalisation avantageux du dispositif objet de l'invention, celui-ci comprend en outre une lentille de collection qui est placée en regard du second dioptre du second élément optique, dont l'axe optique est confondu avec l'axe de symétrie de ce second dioptre, et qui est prévue pour former un faisceau lumineux parallèle à partir de la lumière qu'elle collecte dudit second dioptre.

Il suffit alors d'un moyen optique simple, placé à la suite de cette lentille, pour reformer l'image du point éclairé du flux de matière étudié.

La présente invention a également pour objet un cytofluorimètre comprenant:
—des moyens pour former un flux de cellules biologiques dirigé suivant un axe.

—des moyens de formation d'au moins un faisceau lumineux d'excitation de ces cellules,

—un dispositif optique permettant cette excitation et le recueil de lumière émise par le flux de cellules, et

—des moyens d'analyse de cette lumière, le dispositif optique étant conforme au dispositif optique également objet de l'invention, le flux de matière étant le flux de cellules et le premier élément optique étant traversable par ce flux de cellules.

Selon un mode de réalisation particulier du cytofluorimètre objet de l'invention, la face externe du premier élément optique comporte au moins un méplat prévu pour l'entrée du faisceau lumineux d'excitation.

Selon un autre mode de réalisation particulier, le cytofluorimètre de l'invention comprend en outre un réflecteur de lumière prévu pour capter une partie de la lumière diffusée par le flux de cellules et la lumière du faisceau d'excitation subsistant après cette excitation, à leur sortie du dispositif optique, et pour former un faisceau lumineux parellèle à partir de cette lumière subsistante et de ladite partie de lumière diffusée.

Selon un mode de réalisation préféré du cytofluorimètre objet de l'invention, le dispositif optique dont il est muni comporte la lentille de collection considérée plus haut et ce cytofluorimètre comporte en outre un ensemble optique prévu pour transformer le faisceau lumineux parallèle formé par la lentille de collection en un faisceau lumineux convergent.

Selon un autre mode de réalisation particulier du cytofluorimètre objet de l'invention, l'axe du flux de cellules est perpendiculaire à l'axe de symétrie du dioptre du premier élément, le faisceau lumineux d'excitation est un faisceau laser tombant sur le flux de cellules en un point distinct du centre de la chambre, le dispositif optique du cytofluorimètre comprend la paroi optiquement réflectrice et la lentille de collection mentionnées plus haut et ce cytofluorimètre comprend en outre:

—une lentille cylindrique disposée à la suite de l'ensemble optique et apte à former deux nappes lumineuses parallèles à partir de la lumière émergeant de cet ensemble,

—au moins une fente d'analyse de ces nappes, déplaçable transversalement à celles-ci et placée à la suite de la lentille cylindrique, et

—des moyens photodétecteurs placés à la suite de la fente d'analyse.

On peut ainsi étudier la lumière diffusée par les cellules suivant des angles importants.

On peut éventuellement disposer à la suite de l'ensemble optique un miroir dichroïque qui ne réfléchit que la lumière de même longueur d'onde que celle du faisceau lumineux d'excitation et que ne transmet que les longueurs d'onde correspondant aux fluorescences et disposer sur le trajet de la lumière réfléchie par le miroir dichroïque, une lentille cylindrique suivie par une fente d'analyse, elle-même suivie par des moyens photodétecteurs, de manière à pourvoir étudier simultanément la diffusion aux grands angles et la ou les fluorescences.

Selon un autre mode de réalisation particulier, l'axe du flux de cellules est perpendiculaire à l'axe de symétrie du dioptre sphérique convexe du premier élément, l'excitation des cellules est réalisée à l'aide d'un premier et d'un second faisceaux laser tombant sur le flux de cellules respectivement au centre de la chambre d'analyse et en un point distinct de ce centre, et le dispositif optique du cytofluorimètre est muni de la paroi réflectrice et de la lentille de collection mentionées plus haut.

Selon un autre mode de réalisation particulier, le cytofluorimètre objet de l'invention comprend en outre:

—une première lentille, délimitée par une face plane et par un dioptre sphérique convexe, la face plane étant placée contre un méplat du premier élément optique.

—une seconde lentille délimitée par un dioptre sphérique convexe et par un dioptre sphérique concave disposé en regard du dioptre convexe de la première lentille, et

—un télescopé destiné à transformer le faisceau d'excitation en un faisceau convergent, de grand diamètre, couvrant au mieux le dioptre convexe de la seconde lentille,

le premier point de Weierstrass du dioptre de la première lentille est confondu avec le centre de la chambre d'analyse et le second point Weierstrass de ce dioptre constitue à la fois le centre du dioptre concave de la seconde lentille et le premier point de Weierstrass du dioptre convexe de cette seconde lentille.

Cet autre mode de réalisation particulier permet d'effecteur des "mesures de profils", c'est-à-dire d'étudier les cellules tranche par tranche.

Selon une réalisation particulière de l'invention, les moyens de formation du faisceau d'excitation sont prévus pour injecter celui-ci dans le dispositif optique de telle façon que le faisceau d'excitation tombe sur le dioptre sphérique convexe du premier élément optique de ce dispositif optique.

Enfin, dans une autre réalisation particulière, le cytofluorimètre objet de l'invention comprend en outre des moyens pour analyser électriquement les cellules, ce cytofluorimètre étant donc compatible avec les mesures de type "COULTER".

La présente invention sera mieux comprise à la lecture de la description qui suit, d'exemples de réalisation donnés à titre indicatif et nullement limitatif, en référence aux dessins annexés sur lesquels:

—la figure 1 est une vue schématique d'un mode de réalisation particulier du cytofluorimètre objet de l'invention, muni du dispositif optique également objet de l'invention,

—la figure 2 est une vue schématique en perspective de ce dispositif optique,

—la figure 3 est une vue schématique en coupe dudit dispositif, et de moyens optiques complémentaires du cytofluorimètre,

—la figure 4 est une vue schématique d'un ensemble optique placé à la suite de ce dispositif et permettant d'étudier notamment la fluorescence des cellules biologiques,

—les figures 5a et 5b sont des vues schématiques respectivement de côté et de dessus, le moyens qui sont placés à la suite de l'ensemble optique et qui permettent d'étudier la lumière diffusée par les cellules suivant des angles importants,

—la figure 6 est une vue schématique d'un mode de réalisation particulier du cytofluorimètre objet de l'invention, permettant d'effectuer des mesures de profil des cellules, et

—la figure 7 est une vue schématique d'un autre mode de réalisation particulier, utilisant non pas un ou plusieurs lasers mais une source lumineuse incohérente dont la lumière est injectée par la face de sortie du dispositif optique dont le cytofluorimètre est muni.

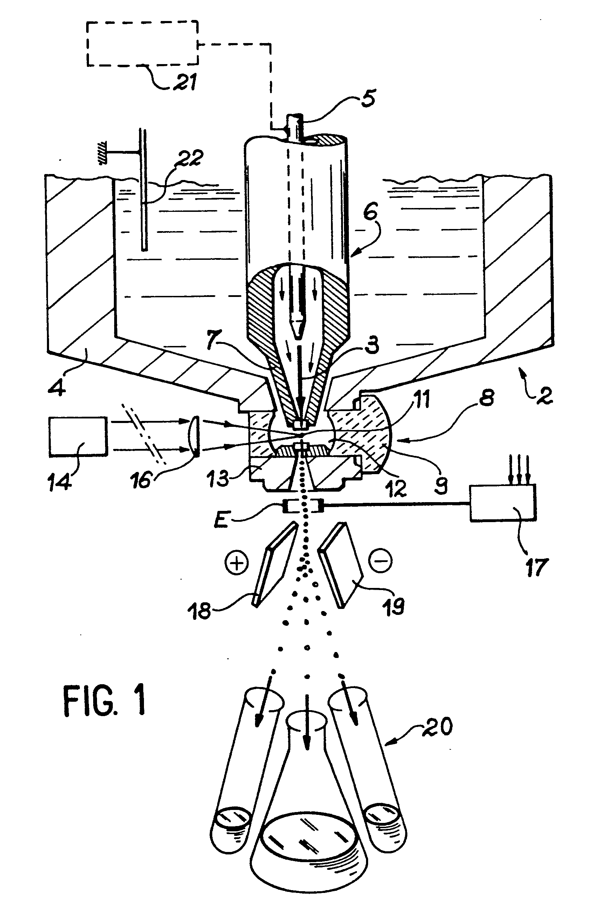

Sur la figure 1, on a représenté schématiquement un mode de réalisation particulier du cytofluorimètre objet de l'invention. Il comprend des moyens 2 pour former un flux axial de cellules biologiques 3. Ces moyens 2 comprennent, dans un support 4, un conduit 5 destiné à la circulation d'une suspension de cellules biologiques et une chambre d'écoulement 6 qui contient un liquide entraîneur et qui est terminée par une buse 7 permettant la formation du flux de cellules.

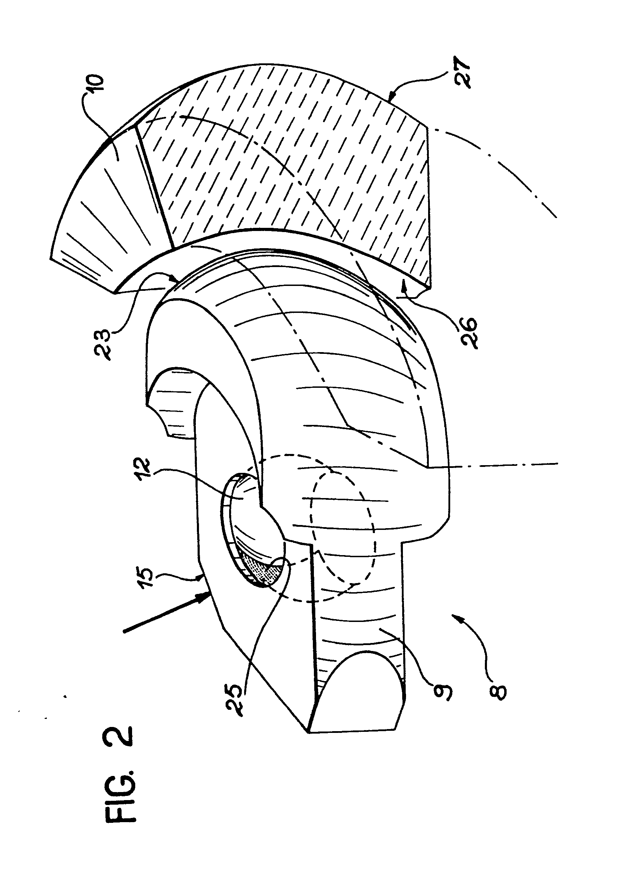

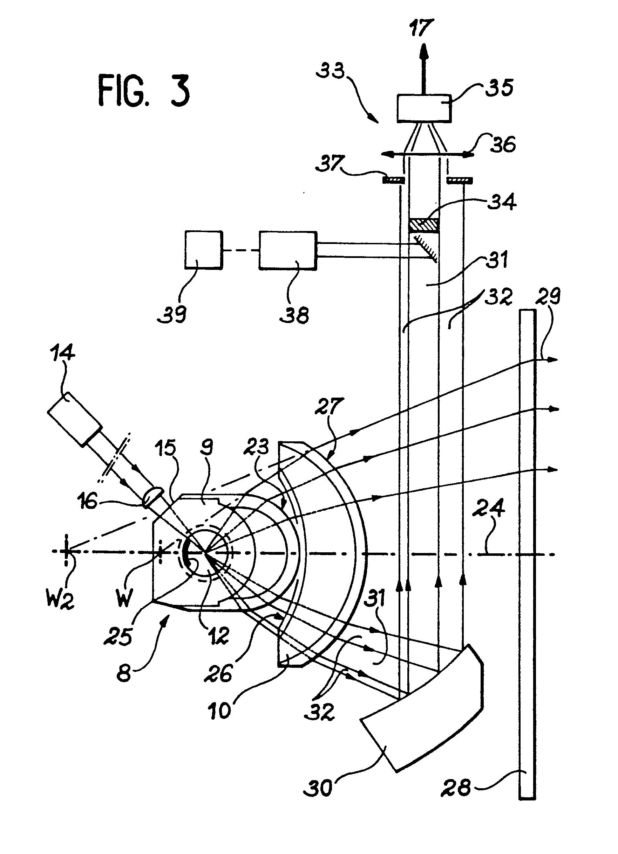

Le cytofluorimètre comporte également un dispositif optique 8 composé d'un premier élément 9 et d'un second élément 10 (figures 2 et 3) de préférence réalisés en un matériau tel que la silice fondue ou le matériau commercialement disponsible sous le nom de SUPRASIL par exemple, de façon que ces éléments puissent être traversés entre autres par de la lumière ultraviolette destinée à l'excitation lumineuse des cellules. Le premier élément optique 9 comporte intérieurement une chambre 12 de forme sphérique dont le centre est référencé 11. Cette chambre et ouverte en deux extrémités diamétralement opposées. Le premier élément optique 9 est fixé au support 4 de façon que la buse 7 débouche dans la chambre par l'une des extrémités de celle-ci et que le flux de cellules formé passe par le centre de la chambre. Une autre buse 13 est fixée au premier élément optique 9 de façon à communiquer avec la chambre 12 par l'autre extrémité de celle-ci et se trouver en regard de la buse 7. Le flux de cellules formé, après avoir traversé la chambre 12, débouche ainsi à l'air libre par l'intermédiaire de l'autre buse 13.

Le cytofluorimètre comporte également un laser 14 apte à émettre un faisceau lumineux qui est focalisé sur le flux de cellules, au centre 11 de la chambre, dans laquelle il pénètre par un méplat 15 (figure 3) pratiqué sur la face externe de premier élément optique, une lentille 16 de focalisation étant disposée en regard de ce méplat, sur la trajectoire du faisceau laser.

Lorsqu'il sort à l'air libre, le flux de cellules est fractionné en gouttes par des moyens connus et non représentés. Le cytofluorimètre comporte en outre des moyens électroniques 17 destinés à commander la charge des gouttes et le signe de cette charge par l'intermédiaire d'une électrode annulaire E disposée à l'air libre, en regard de l'autre buse 13 de manière à pouvoir être traversée par les gouttes, et en fonction de signaux reçus de différents moyens photodétecteurs dont il sera question par la suite et qui sont destinés à détecter la lumière de fluorescence émise par les cellules convenablement marquées, sous l'impact du faisceau laser.

Une paire de plaques conductrices 18 et 19 respectivement portées à une haute tension positive et à une haute tension négative et disposées de part et d'autre du flux de cellule lorsque celui-ci débouche à l'air libre, permettent ainsi d'envoyer sélectivement les gouttes chargées électriquement dans des récipients 20.

Le cytofluorimètre représenté sur la figure 1 est compatible avec les mesures électroniques de type COULTER: on peut en effet compter électriquement le nombre des cellules et mesurer électriquement le volume de celles-ci, à l'aide de moyens électroniques de mesure 21 reliés au conduit 5, et d'une électrode 22 mise à la masse et disposée dans le volume délimité par le support 4, ce volume et la chambre 12 avec laquelle il communique étant alors remplis d'un liquide physiologique.

La premier élément optique 9 (figures 2 et 3) est délimité extérieurement par un dioptre sphérique convexe 23 qui lui confère la forme d'une demi-boule. Celle-ci se trouve d'un côté d'un plan diamétral de la chambre 12 comprenant l'axe du flux de cellules, tandis que le méplat 15 se trouve de l'autre côté de ce plan. En outre, afin de pouvoir insérer le dispositif optique dans le cytofluorimètre, la demi-boule est délimitée du côté des faces du premier élément optique 9 sur lesquelles débouchent les ouvertures de la chambre 12, par deux faces planes. Le dioptre 23 possède un axe de symétrie 24 qui constitue l'axe optique du dispositif optique 8 et qui passe par le centre 11 de la chambre 12, tout en étant perpendiculaire à l'axe du flux de cellules.

La lumière transmise, diffusée et éventuellement engendrée par le flux de cellule sous l'impact du faisceau laser, traverse le premier élément optique pour ressortir de celui-ci par le dioptre 23. Une partie 25 de la paroi de la chambre 12, située à l'opposé du dioptre 23 par rapport au centre de cette chambre, est métallisée de façon à renvoyer la lumière émiser par le flux de cellules vers l'arrière du dispositif optique, c'est-à-dire suivant un sens de propagation correspondant à un déplacement à partir du centre de la chambre vers la partie métallisée 25, à l'endroit d'émission de cette lumière, endroit où elle s'additionne au flux lumineux émis vers l'avant du dispositif optique, c'est-à-dire avec un sens de propagation correspondant à un déplacement à partir du centre de la chambre vers le dioptre 23. On augmente ainsi le rendement de collection du dispositif optique. Bien entendu, l'étendue de la partie métallisée 25 est limitée de façon à ne pas rencontrer le faisceau laser lorsque celui-ci est sur le point de pénétrer dans le chambre 12.

Le second élément optique 10 est délimité par un premier dioptre sphérique 26 concave et par un second dioptre sphérique 27 convexe admettant un axe de symétrie commun. Le second élément optique 10 est disposé de façon que cet axe de symétrie commun soit confondu avec l'axe optique 24 et que le dioptre concave 26 soit situé en regard du dioptre 23.

Pour éviter les aberrations sphériques des éléments optiques 9 et 10, ceux-ci sont réalisés en utilisant les propriétés des points de Weierstrass: le centre 11 de la chambre 12 constitue le premier point de Weierstrass du dioptre 23 et le second point de Weierstrass W de ce dioptre 23 constitue à la fois le centre du premier dioptre 26 et le premier point de Weierstrass du second dioptre 27. Le second point de Weierstrass de ce second dioptre 27 est référencé $W_2$ sur la figure 3. On observe sur cette figure 3 que les dioptres successifs éloignent progressivement l'image du point du flux de cellules qui a émis la lumière, de sorte que l'ouverture des faisceaux émergents est progressivement réduite. On peut ainsi ajouter aux deux éléments optiques 9 et 10 une lentille de collection 28 de type classique, disposée en regard du dioptre 27, pour transformer le faisceau lumineux émis par le flux de cellules et sortant du second élément 10 par le second dioptre 27, en un faisceau lumineux parallèle 29, avec un minimum d'aberration sphérique. La lentille de collection 28 consiste par exemple en une lentille dite ''de meilleure forme'', ou en une lentille de FRESNEL corrigée (qui ne présente pas d'aberration sphérique et a une grande ouverture) ou encore en une lentille asphérique.

Le dispositif optique ainsi réalisé permet d'obtenir un rendement de collection de l'ordre de 18% alors que le rendement d'une lentille de diamètre 2 cm, placée à 2 cm du point d'émission, n'est que de 5% environ.

Un réflecteur de lumière 30, par exemple constitué par un miroir torique, est convenablement placé en regard du second dioptre 28 pour capter la partie 31 du faisceau du laser 14 qui est transmise par le flux de cellules et une partie 32 de la lumière diffusée par ce flux suivant des angles peu importants, et les transformer en des faisceaux parallèles sur la trajectoire desquels est disposé un ensemble de détection 33.

Pour la mise en oeuvre d'une méthode de diffusion aux petits angles, cet ensemble de détection 33 comprend un masque 34 prévu pour absorber le faisceau 31 ou fasiceau direct, en ne laissant passer que le faisceau de lumière 32, et un photodétecteur 35 (par exemple un photodétecteur au silicium) sur lequel le faisceau de lumière 32 est focalisé par l'intermédiaire d'une lentille 36. Entre celle-ci et le masque 34, on peut disposer un diaphragme à iris 37 pour ajuster la valeur de l'angle maximum que l'on souhaite prendre en considération pour la diffusion. Le photodétecteur 35 est bien entendu relié à des moyens de traitement des signaux qu'il émet. Lesdits moyens de traitement peuvent être incorporés aux moyens électroniques 17.

Pour mettre en oeuvre une méthode d'ombre portée, une fraction de la lumière laser prélevée au niveau du masque 34 par une fibre optique, un miroir ou tout autre moyen, est analysée par un photodétecteur au silicium 38, les signaux émis par ce photodétecteur 38 étant traités dans des moyens appropriés 39.

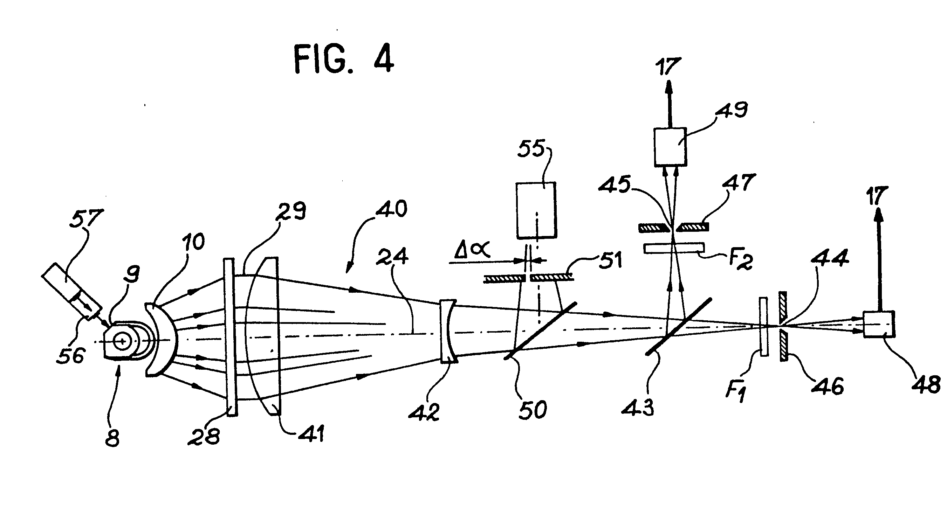

Pour effectuer des études de fluorescence du flux de cellules convenablement marquées, un ensemble optique 40 (figure 4), prévu pour rendre convergent le faisceau parallèle 29 issu de la lentille de collection 28 est disposé à la suite de celle-ci. Cet ensemble optique comprend per exemple une lentille convergente plan-convexe 41 dont la face convexe est tournée vers la lentille de collection 28 et dont l'axe optique est confondu avec l'axe optique 24, ainsi qu'une lentille divergente plan-concave 42 dans la face plane est tournée vers la lentille plan-convexe 41 et dont l'axe optique est confondu avec ledit axe optique 24. Un tel ensemble optique permet d'obtenir un grandissement suffisant en n'occupant qu'un volume réduit.

Dans le cas d'une étude de fluorescence ne faisant intervenir qu'un laser et dans le cas où il existe par exemple deux longueurs d'onde de fluorescence, on dispose sur la trajectoire du faisceau lumineux émergeant de l'ensemble optique 40, entre ce dernier et le domaine de convergence, un miroir dichroïque 43 prévu pour ne laisser passer que la lumière correspondant à l'une des deux longueurs d'onde et pour réfléchir la lumière correspondant à l'autre longueur d'onde. On obtient ainsi deux domaines de convergences 44 et 45 correspondant respectivement aux deux longueurs d'onde et l'on délimite ces domaines au moyen de diaphragmes 46 et 47 prévus pour ne laisser passer que la lumière issue du point d'interaction entre le faisceau laser et le flux de cellules. La sélection en longueur d'onde est complétée par des filtres optiques $F_1$ et $F_2$ respectivement disposés à l'entrée des diaphragmes 46 et 47. Deux moyens de photodétection 48 et 49 sont respectivement disposés à la suite des diaphragmes 46 et 47 pour recueillir la lumière de longueur d'onde correspondante. Ce sont de tels moyens de photodétection 48 et 49 qui sont reliés aux moyens électroniques 17 pour fournir à ceux-ci des signaux permettant le tri des cellules.

Pour effectuer une étude de diffusion aux grands angles, un filtre dichroïque 50 (figure 4) est disposé à 45° sur l'axe optique 24, en regard de la face de sortie de la lentille divergente 42. Ce filtre est prévu pour ne réfléchir que la lumière dont la longueur d'onde est égale à celle du faisceau laser prévu pour exciter le flux de cellules. Un masque à fente 51 est disposé à la suite du filtre dichroïque 50 et permet, par sa position, d'analyser la lumière diffusée dans des angles compris entre 0° et l'ouverture maximale du dispositif optique 8, cette ouverture étant de l'ordre de 95°. La largeur de la fente définit l'ouverture angulaire $\Delta\alpha$ de l'analyse. On dispose à la suite de la fente d'analyse 51 des moyens de photodétection convenables 55.

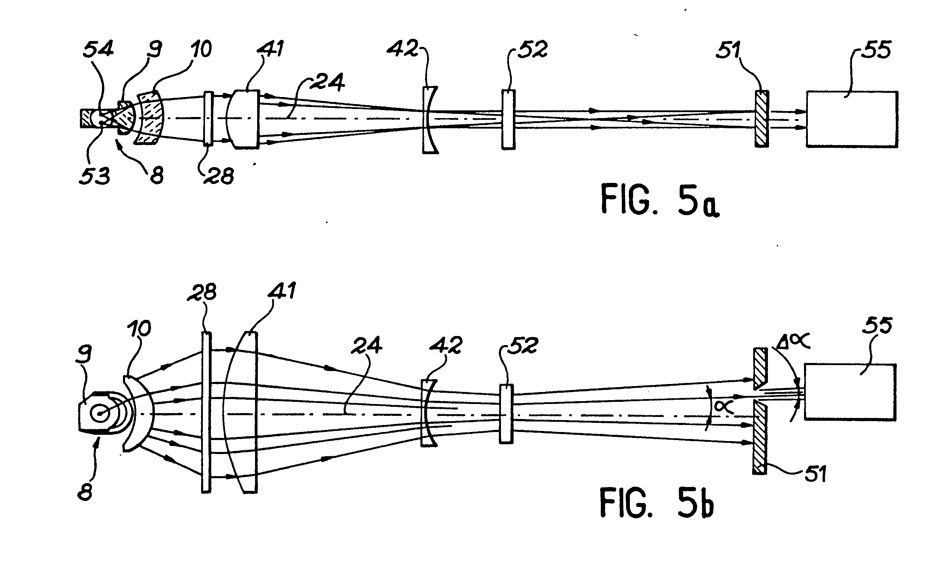

En fait, si l'on tient compte de la partie réflectrice 25 de la chambre 12 (figures 2 et 3), on mesure, pour une position donnée de la fente d'analyse, la somme de deux flux lumineux diffusés correspondant respectivement à des angles $\alpha$ et $\pi+\alpha$. Il est possible d'analyser séparément ces deux flux au moyen d'une lentille cylindrique 52 (figures 5a et 5b) qui est disposée à la suite de la lentille 42 et dont l'axe optique est confondu avec l'axe optique 24, et en disposant le laser 14 (figure 3) de façon que le faisceau laser rencontre le flux de cellules en un point différent du centre de la chambre 12. Dans ces conditions, la partie métallisée de cette chambre forme une image 53 symétrique du point 54 d'interaction entre le faisceau laser et le flux de cellules et la lentille cylindrique 52 forme deux nappes parallèles, l'une correspondant à l'émission vers l'avant, l'autre correspondant à l'image formée à partir de la lumière diffusée vers l'arrière et renvoyée en sens inverse par la partie métallisée 25. Il est alors possible d'analyser séparément d'une part un flux lumineux diffusé entre 0° et 95° environ et d'autre part un flux lumineux diffusé entre environ 90° et 160°. Ces deux analyses sont effectuées au moyen de la fente 51 que l'on déplace perpendiculairement à l'axe optique 24 pour la disposer en regard du flux choisi. Bien entendu on dispose à la suite de la fente d'analyse les moyens de photodétection convenables 55. Au lieu d'une seule fente, on pourrait en utiliser deux qui seraient suivies de moyens de photodétection et qui permettraient d'analyser simultanément les deux flux diffusés.

Comme on l'a déjà indiqué, le dispositif optique de l'invention, muni de l'ensemble optique 40, permet de reformer l'image du point d'interaction entre un faisceau laser et le flux de cellules. Ceci est particulièrement important dans le cas où l'on souhaite étudier la fluorescence des cellules convenablement marquées, en utilisant un premier laser 56 un second laser 57 (figure 4).

Les cellules sont marquées par des fluorochromes A et B qui sont respectivement excités par des longueurs d'onde $\lambda_1$ et $\lambda_2$ et qui réémettent alors dans des bandes respectives $\Delta\lambda_3$ et $\Delta\lambda_4$ de longueur d'onde, $\Delta\lambda_3$ contenant en général $\lambda_2$, d'ou l'impossibilité d'isoler la fluorescence $\Delta\lambda_3$ de la lumière laser parasite $\lambda_2$. En plus du filtrage chromatique, on effectue alors une séparation géometrique.

Pour ce faire, le montage de base utilisé est sensiblement identique au montage utilisé pour le fonctionnement en simple laser (figure 4). Le premier laser est choisi pour émettre à la longueur d'onde $\lambda_1$ et centré dans la chambre 12 sur l'axe optique 24, de manière qui son faisceau soit focalisé sur le flux de cellules. Le second laser est choisi pour émettre à la longueur d'onde $\lambda_2$ et décalé en hauteur par rapport au premier de façon que le point émissif résultant de l'impact du faisceau issu du second laser sur le flux de cellules soit décalé en hauteur par rapport au point émissif résultant de l'impact du faisceau issu du premier laser sur le flux de cellules. Compte tenu de la partie métallisée 25, il existe un point-image du point émissif correspondant au second laser, ce point-image étant symétrique de ce point émissif par rapport au centre de la chambre.

Le système optique comprenant le premier élément 9, le second élément 10 et les lentilles 28, 41 et 42, reforme l'image agrandie des trois points précédemment définis, à proximité des moyens de photodétection 48 et 49 (le miroir dichroïque 43 étant prévu pour réfléchir $\lambda_2$ et la bande $\Delta\lambda_3$ et pour transmettre la bande $\Delta\lambda_4$).

Les diaphragmes 47 et 46 sont remplacés par des masques qui ne laissent arriver repectivement que l'image correspondant à l'émission du fluorochrome A (point unique), sur le moyen de photodétection 49 et que l'image double correspondant à l'emission du fluorochrome B, sur le moyen de photodétection 48.

Il est toujours possible d'effecteur des filtrages optiques complémentaires au moyen de filtres $F_1$ et $F_2$.

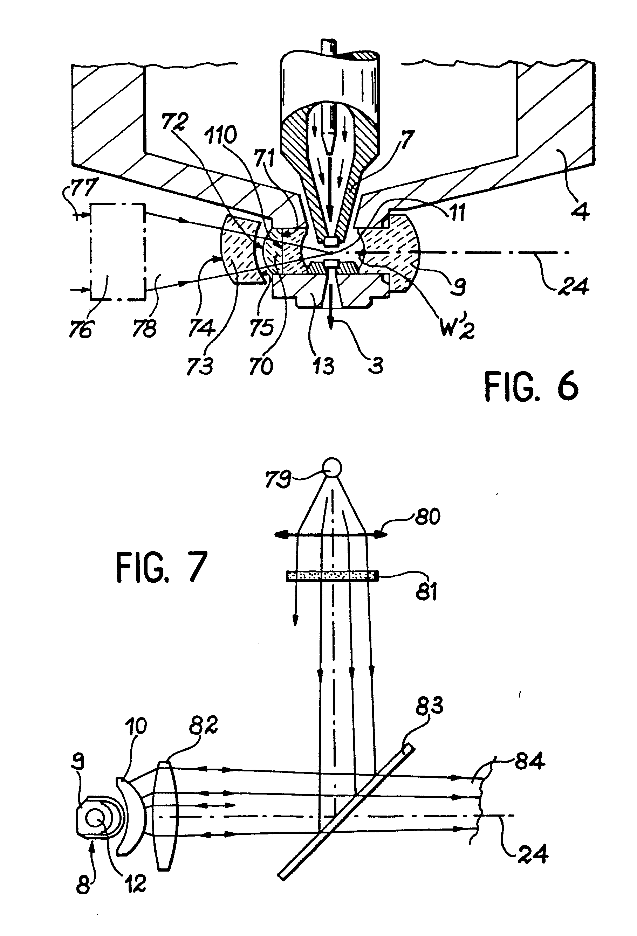

Pour effectuer des mesures de profil sur le flux de cellules, c'est-à-dire pour analyser les cellules tranche par tranche, il convient d'éclairer ce flux de cellules par une nappe lumineuse dont l'épaisseur est faible devant la longueur des cellules. Dans ce cas, une lentille simple 16 n'est pas utilisable du fait de son aberration sphérique trop importante devant la dimension des cellules (10 microns environ). Par ailleurs, un objectif n'est pas non plus utilisable du fait de son trop grand encombrement. On utilise alors (figure 6) un ensemble constitué par une première lentille 70 délimitée par une face plane 71 et par un dioptre sphérique convexe 72, la face plane 71 étant placée contre un méplat 110 pratiqué sur la face externe du premier élément optique 9, ainsi qu'une seconde lentille 73 délimitée par un dioptre sphérique convexe 74 et par un dioptre sphérique concave 75 disposé en regard du dioptre convexe 72 de la première lentille 70. Les lentilles 70 et 73 utilisent les propriétés des points de Weierstrass pour assurer une réduction de l'ouverture finale des faisceaux sans introduire d'aberration sphérique. En d'autres termes, le premier point de Weierstrass du dioptre convexe 72 est confondu avec le centre 11 de la chambre 12, et le second point de Weierstrass $W_2'$ du dioptre convexe 72 constitue à la fois le centre du dioptre concave 75 et le premier point de Weierstrass du dioptre convexe 74.

Un télescope 76 qui peut être placé à l'extérieur du montage constitué par le support 4 muni du dispositif optique 8 et des lentilles 70 et 73, est prévu pour transformer le faisceau laser d'excitation 77 en un faisceau convergent 78, couvrant au maximum l'ouverture de l'ensemble optique 73, 70, ce faisceau 78 étant ensuite focalisé sue le centre 11 de la chambre 12 grâce aux deux lentilles 70 et 73. La résolution de l'ensemble de ces deux lentilles 70 et 73 peut être inférieure à 0,8 micron pour une longueur d'onde d'excitation de 488 nm, et environ égale à 0,6 micron dans l'ultraviolet.

Le cytofluorimètre précédemment décrit permet la mise en oeuvre d'un grand nombre de méthodes d'analyse, pour peu que des moyens appropriés lui soient adjoints, comme on l'a vu précédemment. Il est également possible de réaliser un cytofluorimètre moins coûteux, dont les fonctions sont spécifiques et en nombre limité. Pour ce faire, on remplace notamment le ou les lasers du cytofluorimètre par une source de lumière incohérente convenablement disposée et, par exemple constituée par une lampe à vapeur de mercure 79 (figure 7). Le dispositif optique 8 selon l'invention est parfaitement adapté à une utilisation avec une telle lampe, ce cytofluorimètre permettant toujours la mise en oeuvre de mesures électriques de type COULTER.

La lampe à vapeur de mercure 79 est suivie par une optique de collection 80, elle-même suivie par un filtre 81 prévu pour isoler une raie dans le spectre d'émission du mercure. La lentille 28 (figure 3), par exemple constituée par une lentille de FRESNEL, est ici remplacée par une lentille classique 82, apte à transmettre la lumière ultraviolette. Un miroir dichroïque 83 est disposé à 45° de l'axe optique 24, en regard de le lentille 82 et à l'opposé de second élément 10 par rapport à cette lentille 82. La lampe 79, suivie par la lentille 80 et par le filtre 81, est disposée de façon à envoyer de la lumière sur le miroir dichroïque 83. Ce dernier est choisi de façon à réfléchir la lumière émise par la lampe 79 et à transmettre la lumière de fluorescence que les cellules biologiques, convenablement marquées, sont capables d'émettre par interaction avec la lumière émise par la lampe 79. La lumière émise par la lampe 79 pénètre ainsi dans la chambre 12 après avoir traversé successivement la lentille 82, le second élément 10 et le premier élément 9. Ladite lumière interagit alors avec le flux de cellules qui émet de la lumière de fluorescence. Celle-ci traverse alors successivement le premier élément 9, le second élément 10, la lentille 82 et le miroir dichroïque 83. On peut alors effectuer des mesures de fluorescence sur le faisceau lumineux 84 émergeant du miroir dichroïque 83. Le tri des cellules, effectué à partir d'une analyse de ce faisceau 84, est également toujours possible.

Bien évidemment, on pourrait, dans une variante de réalisation, remplacer la lampe à vapeur de mercure par un laser.

**Revendications**

1. Dispositif optique permettant l'excitation lumineuse d'un flux (3) de matière à analyser dirigé suivant un axe et capable d'émettre de la lumière lorsqu'il en reçoit, et/ou de recueil de lumière émise par ce flux, ce dispositif comprenant un premier élément optique (9), dispositif caractérisé en ce qu'il comprend en outre une chambre d'analyse de forme sphérique (12), délimitée par le premier élément optique et admettant un centre de symétrie (11), ladite chambre étant ouverte en deux extrémités diamétralement opposées, en ce que le premier élément optique comporte un dioptre sphérique convexe (23) admettant un axe de symétrie qui passe par le centre de la chambre, en ce que le premier élément optique est disposé de façon que l'axe du flux de matière passe par les deux extrémités et le centre de la chambre, et en ce qu'il comprend aussi un second élément optique (10) admettant un axe de symétrie, et disposé de façon que son premier dioptre soit en regard du dioptre sphérique convexe (23) du premier élément optique (9) et que l'axe de symétrie dudit second élément optique soit confondu avec l'axe de symétrie (24) du dioptre sphérique convexe du premier élément optique.

2. Dispositif selon la revendication 1, caractérisé en ce que la chambre d'analyse (12) comporte une paroi optiquement réflectrice (25) située à l'opposé du dioptre sphérique convexe (23) du premier élément optique, par rapport au centre (11) de la chambre.

3. Dispositif selon la revendication 1, caractérisé en ce que le premier point de Weierstrass du dioptre sphérique convexe (23) du premier élément optique (9) est confondu avec le centre (11) de la chambre d'analyse.

4. Dispositif selon la revendication 1, caractérisé en ce que le second élément optique est délimité par un premier (26) et un second (27) dioptres sphériques respectivement concave et convexe, admettant un axe de symétrie commun, qui est l'axe de symétrie du second élément optique.

5. Dispositif selon les revendications 3 et 4, caractérisé en ce que le second point de Weierstrass du dioptre sphérique convexe (23) du premier élément optique constitue à la fois le centre du premier dioptre (26) de second élément optique (10) et le premier point de Weierstrass du second dioptre (27) de ce second élément optique.

6. Dispositif selon la revendication 4, caractérisé en ce qu'il comprend en outre une lentille de collection (28) qui est placée en regard du second dioptre (27) du second élément optique (10), dont l'axe optique est confondu avec l'axe de symétrie de ce second dioptre, et qui est prévue pour former un faisceau lumineux parallèle à partir de la lumière qu'elle collecte dudit second dioptre.

7. Cytofluorimètre comprenant:
—des moyens (2) pour former un flux (3) de cellules biologiques dirigé suivant un axe,
—des moyens (14, 56—57, 79) de formation d'au moins un faisceau lumineux d'excitation de ces cellules,
—un dispositif optique (8) permettant cette excitation et le recueil de lumière émise par le flux de cellules, et
—des moyens d'analyse (33, 38—39, 50—51—55, 46—47—48—49) de cette lumière, caractérisé en ce que le dispositif optique (8) est conforme à l'une quelconque des revendications 1 à 6, le flux de matière étant le flux de cellules et le premier élément optique (9) étant traversable par ce flux de cellules.

8. Cytofluorimètre selon la revendication 7, caractérisé en ce que la face externe du premier élément optique (8) comporte au moins un méplat (15, 110) prévu pour l'entrée du faisceau lumineux d'excitation.

9. Cytofluorimètre selon l'une quelconque des revendications 7 et 8, caractérisé en ce qu'il comprend en outre un réflecteur de lumière (30) prévu pour capter une partie de la lumière diffusée par le flux de cellules (3) et la lumière du faisceau d'excitation subsistant après cette excitation, à leur sortie du dispositif optique, et pour former un faisceau lumineux parallèle à partir de cette lumière subsistante et de ladite partie de lumière diffusée.

10. Cytofluorimètre selon l'une quelconque des revendications 7 à 9, caractérisé en ce que le dispositif optique (8) est conforme à la revendication 6, et en ce que ce cytofluorimètre comporte en outre un ensemble optique (40) prévu pour transformer le faisceau lumineux parallèle formé par la lentille de collection (28) en un faisceau lumineux convergent.

11. Cytofluorimètre selon la revendication 10, caractérisé en ce que l'axe du flux de cellules (3) est perpendiculaire à l'axe de symétrie (24) du dioptre sphérique convexe (23) du premier élément (9), en ce que le faisceau lumineux d'excitation est un faisceau laser tombant sur le flux de cellules en un point distinct du centre (11) de la chambre (12), en ce que le dispositif optique (8) est conforme aux revendications 2 et 6, et en ce que le cytofluorimètre comprend en outre:

—une lentille cylindrique (52) disposée à la suite de l'ensemble optique (40) et apte à former deux nappes lumineuses parallèles à partir de la lumière émergeant de cet ensemble,

—au moins une fente (51) d'analyse de ces nappes, déplaçable transversalement à celles-ci et placée à la suite de la lentille cylindrique, et

—des moyens photodétecteurs (55) placés à la suite de la fente d'analyse.

12. Cytofluorimètre selon la revendication 10, caractérisé en ce que l'axe du flux de cellules est perpendiculaire à l'axe de symétrie du dioptre sphérique convexe du premier élément, en ce que l'excitation des cellules est réalisée à l'aide d'un premier et d'un second faisceaux laser tombant sur le flux de cellules respectivement au centre (11) de la chambre d'analyse (12) et en un point distinct de ce centre, et en ce que le dispositif optique est conforme aux revendications 2 et 6.

13. Cytofluorimètre selon la revendication 8, caractérisé en ce qu'il comprend en outre:

—une première lentille (70) délimitée par une face plane (71) et par un dioptre sphérique convexe (72), la face plane étant placée contre un méplat (11) du premier élément optique (9).

—une seconde lentille (73) délimitée par un dioptre sphérique convexe (74) et par un dioptre sphérique concave (73) disposé en regard du dioptre convexe (72) de la première lentille (70), et

—un télescope (76) destiné à transformer le faisceau d'excitation en un faisceau convergent, couvrant au mieux le dioptre convexe de la seconde lentille,

en ce que le premier point de Weierstrass du dioptre (72) de la première lentille (70) est confondu avec le centre (11) de la chambre d'analyse et en ce que le second point de Weierstrass de ce dioptre (72) constitue à la fois le centre du dioptre concave (75) de la seconde lentille (73) et le premier point de Weierstrass du dioptre convexe (74) de cette seconde lentille (73).

14. Cytofluorimètre selon l'une quelconque des revendications 7 à 10, caractérisé en ce que les moyens (79) de formation du faisceau d'excitation sont prévus injecter celui-ci dans le dispositif optique (8) de telle façon que le faisceau d'excitation tombe sur le dioptre sphérique convexe (23) du premier élément optique (9) de ce dispositif optique.

15. Cytofluorimètre selon l'une quelconque des revendications 7 à 14, caractérisé en ce qu'il comprend en outre des moyens (22) pour analyser électriquement les cellules.

16. Cytofluorimètre selon la revendication 7, caractérisé en ce que les moyens pour former le flux comprennent une première buse (7) qui débouche dans la chamber (12) par l'une desdites extrémités diamétralement opposées et en ce que le cytofluorimètre comprend en outre:

—une seconde buse (13) qui déboucher de la chambre (12) par l'autre desdites extrémités diamétralement opposées et qui est disposée en regard de la première buse (7),

—des moyens (21, 22) pour l'analyse électrique des cellules, et

—des moyens (17, 18, 19) de tri des cellules, ces moyens de tri étant placés à la sortie de la seconde buse (13).

**Patentansprüche**

1. Optische Vorrichtung, die die leuchtende Anregung eines zu analysierenden Materieflusses (3), der entlang einer Achse gerichtet ist und geeignet ist, Licht auszusenden, wenn er welches empfängt, und/oder den Empfang des von diesem Fluß ausgesandten Lichts ermöglicht, wobei diese Vorrichtung ein erstes optisches Element aufweist und dadurch gekennzeichnet ist, daß sie außerdem eine kugelförmige Analysenkammer (12) umfaßt, die durch das erste optische Element begrenzt wird und ein Symmetriezentrum (11) zuläßt, wobei diese Kammer an zwei diametral gegenüberliegenden Enden geöffnet ist; daß das erste optische Element einen kugelförmigen, konvexen Diopter (23) umfaßt, der eine Symmetrieachse zuläßt, die durch den Mittelpunkt der Kammer geht; daß das erste optische Element so angeordnet ist, daß die Achse des Materieflusses durch die beiden Enden und den Mittelpunkt der Kammer geht; und dadurch, daß sie außerdem ein zweites optisches Element (10) umfaßt, das eine Symmetrieachse zuläßt und so angeordnet ist, daß sein erster Diopter gegenüber dem kugelförmigen, konvexen Diopter (23) des ersten optischen Elements (9) liegt und daß die Symmetrieachse des zweiten optischen Elements mit der Symmetrieachse (24) des kugelförmigen, konvexen Diopters des ersten optischen Elements zusammenfällt.

2. Vorrichtung nach Anspruch 1, dadurch gekennzeichnet, daß die Analysenkammer (12) eine optische reflektierende Wand (25) umfaßt, die bezogen auf den Mittelpunkt (11) der Kammer gegenüber dem kugelförmigen, konvexen Diopter (23) der ersten optischen Elements angeordnet ist.

3. Vorrichtung nach Anspruch 1, dadurch gekennzeichnet, daß der erste Weierstraßpunkt des kugelförmigen, konvexen Diopters (23) des ersten optischen Elements (9) mit dem Mittelpunkt (11) der Analysenkammer zusammenfällt.

4. Vorrichtung nach Anspruch 1, dadurch gekennzeichnet, daß das zweite optische Element durch einen ersten, kugelförmigen, konkaven (26) und einen zweiten, kugelförmigen, konvexen (27) Diopter begrenzt ist, die eine gemeinsame Symmetrieachse zulassen, die die Symmetrieachse des zweiten optischen Elements ist.

5. Vorrichtung nach den Ansprüchen 3 und 4, dadurch gekennzeichnet, daß der zweite Weierstraßpunkt des kugelförmigen, konvexen Diopters (23) der ersten optischen Elements zugleich den Mittelpunkt des ersten Diopters (26) des zweiten optischen Elements (10) und den ersten Weierstraßpunkt des zweiten Diopters (27) dieses zweiten optischen Elements bildet.

6. Vorrichtung nach Anspruch 4, dadurch gekennzeichnet, daß sie außerdem eine Sammellinse (28) umfaßt, die gegenüber dem zweiten Diopter (27) des zweiten optischen Elements (10) angeordnet ist, deren optische Achse mit der Symmetrieachse dieses zweiten Diopters zusammenfällt und die vorgesehen ist, ein paralleles Lichtbündel ausgehend von dem Licht, das sie von dem zweiten Diopter sammelt, zu bilden.

7. Zytofluorimeter mit:
—Vorrichtungen (2) zum Bilden eines Flusses (3) biologischer Zellen, der entlang einer Achse gerichtet ist,
—Vorrichtungen (14, 56—57, 79) zum Bilden wenigstens eines Anregungslichtbündels für diese Zellen,
—eine optische Vorrichtung (8), die diese Anregung und den Empfang des von diesem Zellfluß ausgesandten Lichts erlaubt,
—Analysevorrichtungen (33, 38—39, 50—51—55, 46—47—46—49) für dieses Licht,
dadurch gekennzeichnet, daß die optische Vorrichtung (8) einer aus den Ansprüchen 1 bis 8 entspricht, wobei der Materiefluß der Zellenfluß ist und das erste optische Element (9) für diesen Zellenfluß durchdringbar ist.

8. Zytofluorimeter nach Anspruch 7, dadurch gekennzeichnet, daß die Außenfläche der ersten optischen Elements (8) wenigstens eine Abflachung (15, 110) aufweist, die für den Eintritt des Anregungslichtbündels vorgesehen ist.

9. Zytofluorimeter nach einem der Ansprüche 7 und 8, dadurch gekennzeichnet, daß es außerdem einen Lichtreflektor (30) aufweist, der vorgesehen ist, einen Teil des von dem Zellenfluß (3) diffundierten Lichts und das Licht des Anregungslichtbündels, das nach dieser Anregung bestehen bleibt, bei ihrem Austritt aus der optischen Vorrichtung einzufangen une ein paralleles Lichtbündel aus diesem bestehenden Licht und dem diffundierten Lichtteil zu bilden.

10. Zytofluorimeter nach einem der Ansprüche 7 bis 9, dadurch gekennzeichnet, daß die optische Vorrichtung (8) der aus Anspruch 6 entspricht und daß das Zytofluorimeter eine optische Anordnung (40) umfaßt, die vorgesehen ist, daß von der Sammellinse (28) gebildete, parallele Lichtbündel in ein konvergentes Lichtbündel umzuwandeln.

11. Zytofluorimeter nach Anspruch 10, dadurch gekennzeichnet, daß die Zellenflußachse (3) senkrecht zur Symmetrieachse (24) des kugelförmigen, konvexen Diopters (23) des ersten Elements ist; daß das Anregungslichtbündel ein Laserlichtbündel ist, daß auf den Zellenfluß in einem Punkt tritt, der verschieden ist vom Mittelpunkt (11) der Kammer (12); daß die optische Vorrichtung (8) der aus den Ansprüchen 2 und 6 entspricht; und daß das Zytofluorimeter außerdem umfaßt:
—eine Zylinderlinse (52), die nach der optischen Anordnung (40) angeordnet ist und die geeignet ist, zwei parallele Lichtflecken aus dem aus dieser Anordnung austretenden Licht zu bilden,
—wenigstens einen Analysespalt (51) für diese Flecken, der transversal zu diesen beweglich ist und nach der Zylinderlinse angeordnet ist, und
—Photodetektorvorrichtungen (55) die nach dem Analysespalt angeordnet sind.

12. Zytofluorimeter nach Anspruch 10, dadurch gekennzeichnet, daß die Zellenflußachse senkrecht zur Symmetrieachse des kugelförmigen, konvexen Diopters des ersten Elements ist; daß die Anregung der Zellen mittels eines ersten und zweiten Laserstrahlbündels durchgeführt wird, die jeweils im Mittelpunkt (11) der Analysenkammer (12) und in einem von diesem Mittelpunkt verschiedenen Punkt auf den Zellenfluß treffen; und daß die optische Vorrichtung der aus den Ansprüchen 2 und 6 entspricht.

13. Zytofluorimeter nach Anspruch 8, dadurch gekennzeichnet, daß es außerdem umfaßt:
—eine erste Linse (70), die von einer ebenen Fläche (71) und einem kugelförmigen, konvexen Diopter (72) begrenzt wird, wobei die ebene Fläche gegen eine Abflachung (11) des ersten optischen Elements (9) angeordnet ist,
—eine zweite Linse (73), die von einem kugelförmigen, konvexen Diopter (74) und einem kugelförmigen konkaven Diopter (75), der gegenüber dem konvexen Diopter (72) der ersten Linse (70) angeordnet ist, begrenzt wird, und
—ein Teleskop (76), das bestimmt ist, das Anregungslichtbündel in ein konvergentes Lichtbündel zu verwandeln, das bestenfalls den konvexen Diopter der zweiten Linse bedeckt; daß der erste Weierstraßpunkt des Diopters (72) der ersten Linse (70) mit dem Mittelpunkt (11) der Analysenkammer (12) zusammenfällt; und daß der zweite Weierstraßpunkt dieses Diopters (72) zugleich den Mittelpunkt des konkaven Diopters (75) der zweiten Linse (73) und den ersten Weierstraßpunkt des konvexen Diopters (74) dieser zweiten Linse (73) bildet.

14. Zytofluorimeter nach einem der Ansprüche 7 bis 10, dadurch gekennzeichnet, daß die Vorrichtungen (79) zum Bilden des Anregungslichtbündels vorgesehen sind, dieses so in die optische Vorrichtung (8) einzustrahlen, daß das Anregungslichtbündel auf den kugelförmigen, konvexen Diopter (23) des ersten optischen Elements dieser optischen Vorrichtung (9) fällt.

15. Zytofluorimeter nach einem der Ansprüche 7 bis 14, dadurch gekennzeichnet, daß es außerdem Vorrichtungen (22) zur elektrischen Analyse der Zellen umfaßt.

16. Zytofluorimeter nach Anspruch 7, dadurch gekennzeichnet, daß die Vorrichtungen zum Bilden des Flusses eine erste Düse (7) umfassen, die durch eines der diametral einander gegenüberliegenden Enden in die Kammer mündet, und daß das Zytofluorimeter außerdem umfaßt:

—eine zweite Düse (13), die durch die andere der diametral einander gegenüberliegenden Öffnungen in die Kammer (12) mündet und die gegenüber der ersten Düse (7) angeordnet ist.

—Vorrichtungen (17, 18, 19) zur Sortierung der Zellen, wobei diese Sortiervorrichtungen am Ausgang der zweiten Düse (13) angeordnet sind.

## Claims

1. Optical device permitting the luminous excitation of a flux (3) of material to be analyzed directed along an axis and able to emit light when it receives it and/or collect light emitted by said flux, said device having a first optical element (9), characterized in that it also comprises a spherical analysis chamber (12), defined by the first optical element and admitting a centre of symmetry (11), said chamber being open at two diametrically opposite ends, in that the first optical element has a convex spherical dioptre (23) admitting an axis of symmetry passing through the centre of the chamber in that the first optical element is disposed in such a way that the axis of the flux of material passes through the two ends and the centre of the chamber and in that it also comprises a second optical element (10) admitting an axis of symmetry and disposed in such a way that its first dioptre faces the convex spherical dioptre (23) of the first optical element (9) and that the axis of symmetry of said second optical element coincides with the axis of symmetry (24) of the convex spherical dioptre of the first optical element.

2. Device according to claim 1, characterized in that the analysis chamber (12) has an optically reflecting wall (25) opposite to the convex spherical dioptre (23) of the first optical element with respect to the centre (11) of the chamber.

3. Device according to claim 1, characterized in that the first Weierstrass point of the convex spherical dioptre (23) of the first optical element (9) coincides with the centre (11) of the analysis chamber.

4. Device according to claim 1, characterized in that the second optical element is defined by a first (26) and a second (27) spherical dioptres, which are respectively concave and convex and which admit a common axis of symmetry, which is the axis of symmetry of the second optical element.

5. Device according to claims 3 and 4, characterized in that the second Weierstrass point of the convex spherical dioptre (23) of the first optical element constitutes both the centre of the first dioptre (26) of the second optical element (10) and the first Weierstrass point of the second dioptre (27) of said second optical element.

6. Device according to claim 4, characterized in that it also comprises a collecting lens (28) positioned facing the second dioptre (27) of the second optical element (10), whose optical axis coincides with the axis of symmetry of said second dioptre and which is provided to form a parallel light beam on the basis of the light which it collects from said second dioptre.

7. Cytofluorimeter comprising means (2) for forming a flow (3) of biological cells directed along an axis, means (14, 56, 57, 59) for forming at least one light beam for exciting these cells, an optical device (8) permitting said excitation and the collecting of the light emitted by the flow of cells and means (33, 38, 39, 50, 51, 55, 46, 47, 48, 49) for analyzing said light, characterized in that the optical device (8) is in accordance with any one of the claims 1 to 6, the flow of material being the flow of cells and the first optical element (9) being traversable by said flow of cells.

8. Cytofluorimeter according to claim 7, characterized in that the outer face of the first optical element (8) has at least one flat (15, 110) for the entry of the exciting light beam.

9. Cytofluorimeter according to any one of the claims 7 and 8, characterized in that is also comprises a light reflector (30) for trapping part of the light diffused by the flow of cells (3) and the light of the exciting beam remaining after said excitation at the exit from the optical device and for forming a parallel light beam on the basis of said remaining light and said diffused light part.

10. Cytofluorimeter according to any one of the claims 7 to 9, characterized in that the optical device (8) is in accordance with claim 6 and in that said cytofluorimeter also has an optical means (40) for transforming the parallel light beam formed by the collecting lens (28) into a convergent light beam.

11. Cytofluorimeter according to claim 10, characterized in that the axis of the flow of cells (3) is perpendicular to the axis of symmetry (24) of the convex spherical dioptre (23) of the first element (9), in that the exciting light beam is a laser beam dropping on the flow of cells at a point separate from the centre (11) of the chamber (12), in that the optical device (8) is in accordance with claims 2 and 6 and in that the cytofluorimeter also comprises a cylindrical lens (52) positioned following the optical means (40) and able to form two parallel light layers from the light emerging from said means, at least one slot (51) for analyzing said layers, displaceable transversely thereto and placed following the cylindrical lens and photodetector means (55) placed following the analysis slot.

12. Cytofluorimeter according to claim 10, characterized in that the flow of cells is perpendicular to the axis of symmetry of the convex spherical dioptre of the first element, in that the excitation of the cells is carried out with the aid of a first and a second laser beam falling on the flow of cells respectively at the centre (11) of the analysis chamber (12) and at a point separate from said centre and in that the optical device is in accordance with claims 2 and 6.

13. Cytofluorimeter according to claim 8, characterized in that it also comprises a first lens (70) defined by a planar face (71) and by a convex spherical dioptre (72), the planar face being placed against a flat (11) of the first optical element (9), a second lens (73) defined by a convex spherical dioptre (74) and by a concave spherical dioptre (75) positioned facing the convex dioptre (72) of the first lens (70) and a telescope (76) for transforming the exciting beam into a convergent beam and covering as far as possible the convex dioptre of the second lens, in that the first Weierstrass point of the dioptre (72) of the first lens (70) coincides with the centre (11) of the analysis chamber (12) and in that the second Weierstrass point of said dioptre (72) constitutes both the centre of the concave dioptre (75) of the second lens (73) and the first Weierstrass point of the convex dioptre (74) of said second lens (73).

14. Cytofluorimeter according to any one of the claims 7 to 10, characterized in that the exciting beam formation means (79) inject the same into the optical device (8) in such a way that the exciting beam falls on the convex spherical dioptre (23) of the first optical element (9) of said optical device.

15. Cytofluorimeter according to any one of the claims 7 to 14, characterized in that it also comprises means (22) for electrically analyzing the cells.

16. Cytofluorimeter according to claim 7, characterized in that the means for forming the flow comprise a first nozzle (7) issuing into the chamber (12) by one of the said diametrically opposite ends and in that the cytofluorimeter also comprises a second nozzle (13) issuing from the chamber (12) by the other of the said diametrically opposite ends and which is positioned facing the first nozzle (7), means (21, 22) for the electrical analysis of the cells and means (17, 18, 19) for sorting the cells, said sorting means being placed at the outlet from the second nozzle (13).

FIG. 1

FIG. 2

EP 0 165 868 B1

# FIG. 3

# FIG. 4

EP 0 165 868 B1

FIG. 5a

FIG. 5b

FIG. 6

FIG. 7